# EUROPÄISCHE PATENTSCHRIFT

(11) **EP 1 716 736 B1**
(45) Veröffentlichungstag und Bekanntmachung des Hinweises auf die Patenterteilung: **21.05.2008**
(21) Anmeldenummer: 06112874.0
(22) Anmeldetag: 21.04.2006
(51) Int. Cl.: A01D 41/12, A01F 12/40

(54) **Mähdrescher**
Combine harvester
Moissonneuse-batteuse

(30) Priorität: 28.04.2005 DE 102005019615
(43) Veröffentlichungstag der Anmeldung: 02.11.2006
(73) Patentinhaber: Deere & Company, Moline, IL 61265-8098 (US)
(72) Erfinder: Lauer, Fritz, 66894, Krähenberg (DE); Priesnitz, Rico, 66822, Lebach (DE); Weichholdt, Dirk, 57200, Sarreguemines (FR)
(74) Vertreter: Holst, Sönke

(56) Entgegenhaltungen:
- DE-A1- 10 064 356
- DE-A1- 10 256 744
- US-A1- 2004 204 210
- US-A1- 2004 242 291

## Beschreibung

Die Erfindung betrifft einen Mähdrescher, mit einer Trenneinrichtung, aus der ein erster Erntegutstrom wahlweise in einer Häckselbetriebsart einem Strohhäcksler zuführbar ist oder in einer Langstrohablagebetriebsart am Strohhäcksler vorbeiführbar und als Schwad auf dem Boden eines Feldes ablegbar ist, einer Reinigungseinrichtung, aus der ein zweiter Erntegutrestestrom in der Häckselbetriebsart und in der Langstrohablagebetriebsart dem Strohhäcksler zuführbar ist, und einer stromab des Strohhäckslers angeordneten, wahlweise zwischen einer Langstrohablageposition und einer Häckselposition bewegbaren Leiteinrichtung, die ausgelegt ist, in der Langstrohablageposition den zweiten Erntegutrestestrom derart abzulenken, dass der zweite Erntegutrestestrom in eine andere Richtung ausgeworfen wird als der erste Erntegutrestestrom, während die Leiteinrichtung in der Häckselposition derart anordenbar ist, dass beide Erntegutströme gemeinsam im Wesentlichen über die Breite einer Erntegutaufnahmeeinrichtung des Mähdreschers über das Feld verteilt werden.

### Stand der Technik

In der DE 100 64 356 A und der DE 102 56 744 A werden Mähdrescher beschrieben, die wahlweise in einem Langstrohablagebetrieb und einem Häckselbetrieb betreibbar sind. Das Stroh wird im Häckselbetrieb durch den Strohhäcksler geleitet und im Langstrohablagebetrieb an dessen Rückseite vorbeigeleitet und in einem Schwad auf dem Boden abgelegt. Die Spreu wird in beiden Betriebsarten durch den Strohhäcksler geleitet. Im Langstrohablagebetrieb werden die Strohleitbleche in eine Stellung gebracht, in der die Spreu beidseits des Schwads über die Arbeitsbreite verteilt wird, aber nicht in den Bereich des Schwads gelangt. Im Häckselbetrieb werden die Strohleitbleche in eine andere Stellung verbracht, in der Spreu und Stroh über die Arbeitsbreite des Felds verteilt werden. Die WO 02/34029 A schlägt einen Mähdrescher mit einem Spreuverteiler und einem Strohhäcksler vor. Der Spreuverteiler kann die Spreu direkt gegen die stromab des Strohhäckslers angeordneten Strohleitbleche blasen, so dass das gehäckselte Stroh und die Spreu durch die Leitbleche über die Arbeitsbreite verteilt werden. In einer anderen Betriebsart wird das Stroh oberhalb des Strohhäckslers vorbeigeleitet und als Schwad auf dem Feld abgelegt, wobei die Spreu durch die Spreuverteiler an den Strohleitblechen entlang geführt und beidseits des Schwads über die Arbeitsbreite verteilt auf dem Feld abgelegt wird. In weiteren Betriebsarten wird das Stroh durch den Strohhäcksler gehäckselt und über die Arbeitsbreite verteilt oder in einem Schwad abgelegt, während die Spreu durch die Spreuverteiler beidseits des Schwads über die Arbeitsbreite verteilt wird. Schließlich ist die Möglichkeit vorgesehen, auch im Schwadablagebetrieb die Spreu in das Strohschwad einzublasen.

In den Prospekten "Deutz-Fahr Topliner 8XL", Druckvermerk 91 532 01 Printed in Germany 9906, "Case IH Cross-Flow", Druckvermerk CF80-D-BR-10/99, und "KP 2000 Anbaustrohhäcksler mit einzigartigem Spreugebläse" der Fa. KPAB, Druckvermerk 941523 werden Mähdrescher beschrieben, die ebenfalls in einer Häckselbetriebsart und einer Langstrohablagebetriebsart betreibbar sind. Das Stroh wird entweder durch den Strohhäcksler gefördert, gehäckselt und über die Arbeitsbreite verteilt (Häckselbetriebsart), oder an dessen Rückseite vorbeigeführt und in einem Schwad auf dem Feld abgelegt (Langstrohablagebetriebsart). Die Spreu wird in beiden Betriebsarten in den Strohhäcksler gefördert und durch die stromab des Strohhäckslers angeordneten Leitbleche über das Feld verteilt.

Beim in den Prospekten der Firmen Deutz, Case und KPAB beschriebenen Stand der Technik wird die Spreu in der Langstrohablagebetriebsart über die Schnittbreite des Mähdreschers verteilt. Dadurch kommt auch ein Anteil der Spreu mit in das Stroh, was für manche Anwendungsgebiete, wie die Pferdeeinstreu, unerwünscht ist. Außerdem bläst der vom Strohhäcksler bereitgestellte Luftstrom das Strohschwad auf, so dass sich das Stroh über eine größere Breite verteilt, als zur Aufnahme mit einer Ballenpresse wünschenswert wäre. Der in der WO 02/34029 A beschriebene Mähdrescher weist diese Nachteile zwar nicht auf, benötigt jedoch relativ aufwändige Spreuverteiler. Bei den Mähdreschern nach DE 100 64 356 A und DE 102 56 744 A sind die Strohleitbleche zu verstellen, um zwischen der Langstrohablagebetriebsart und der Häckselbetriebsart umzuschalten, was sich als relativ umständlich erweist.

### Aufgabe der Erfindung

Die der Erfindung zu Grunde liegende Aufgabe wird darin gesehen, einen verbesserten Mähdrescher bereitzustellen, der die erwähnten Nachteile des Standes der Technik nicht oder in einem verringerten Maße aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, stromab des Strohhäckslers eine zwischen einer Langstrohablageposition und einer Häckselposition bewegbare Leiteinrichtung anzubringen, die in ihrer Langstrohablageposition einen in Richtung auf den ausgeworfenen ersten Erntegutstrom gerichteten Teilbereich des zweiten Erntegutstroms (Spreu) nach unten ablenkt, während der verbleibende erste Erntegutstrom (Stroh) nicht beeinflusst wird. In ihrer Häckselposition beeinflusst sie den aus Stroh und Spreu bestehenden Erntegutstrom nicht nennenswert.

Auf diese Weise erübrigt sich eine Umstellung der Strohleitbleche zwischen dem Langstrohablagebetrieb und dem Häckselbetrieb. Im Langstrohablagebetrieb kann der mittlere Teil des zweiten Erntegutrestestroms (d.h. der Anteil der Spreu, der durch den Strohhäcksler in einen derartigen Winkelbereich ausgeworfen wird, dass sie unter dem Strohschwad zu liegen käme) nicht in das Schwad gelangen, da er nach unten umgelenkt und direkt auf dem Feld abgelegt wird. Außerdem wird verhindert, dass der Schwad aufgeblasen wird. Die im Häckselbetrieb in eine unwirksame, d.h. in eine den Fluss der beiden Erntegutströme nicht nennenswert ablenkende oder beeinflussende Stellung verbrachte Leiteinrichtung hat dann keine störende Auswirkung auf die Verteilung der Erntegutströme.

In einer bevorzugten Ausführungsform der Erfindung sind stromab des Strohhäckslers mehrere Strohleitbleche seitlich nebeneinander angeordnet, in der Regel unterhalb einer Auswurfhaube. Die Leiteinrichtung wird vorzugsweise stromab der Strohleitbleche angebracht, da dort hinreichend Raum zur Verfügung steht. Durch die relativ geringe Entfernung zum ersten Erntegutrestestrom wird auch verhindert, dass Teilchen aus dem zweiten Erntegutrestestrom noch durch Wind in den ersten Erntegutrestestrom getragen werden.

Die Leiteinrichtung ist insbesondere ein plattenförmiges Element, das sich in der Langstrohablageposition etwa vertikal erstreckt, um den mittleren Teil des ersten Erntegutstroms nach unten abzulenken, und in der Häckselposition etwa horizontal orientiert ist, so dass die beiden Erntegutströme ungestört an ihrer Unterseite entlang strömen können. Zwischen diesen Positionen wird die Leiteinrichtung um eine sich horizontal und quer zur Vorwärtsrichtung des Mähdreschers erstreckende Achse geschwenkt.

Es erweist sich als vorteilhaft, die Leiteinrichtung mit einem Verstellantrieb zu verbinden, der sie zwischen ihrer Langstrohablageposition und Häckselposition bewegen kann. Der Verstellantrieb kann manuell oder motorisch betätigt werden, z.B. durch einen Elektro- oder Hydraulikmotor. Bei einer manuellen oder motorischen Betätigung bietet sich eine Kopplung mit den Elementen an, die den ersten Erntegutrestestrom wahlweise in den Strohhäcksler leiten oder daran herbeiführen. Diese Kopplung kann auf mechanische Weise erfolgen, oder es erfolgt eine entsprechende Ansteuerung der jeweiligen Motore.

Vorzugsweise finden zur Formung des ersten Erntegutrestestroms geeignete Strohleitrechen Verwendung. Diese Strohleitrechen werden im Häckselbetrieb nicht benötigt und wegen der von ihnen ausgehenden Verletzungsgefahr in eine Außerbetriebsposition verbracht. Es bietet sich an, die Strohleitrechen antriebsmäßig mit dem Verstellantrieb der Leiteinrichtung zu koppeln. Der Verstellantrieb bringt die Strohleitrechen demnach in der Häckselposition der Leiteinrichtung in die Außerbetriebsposition und in der Langstrohablageposition der Leiteinrichtung in eine Schwadleitposition, in der sie den ersten Erntegutrestestrom seitlich zusammenführen.

Dazu kann die Leiteinrichtung mit einer vom Verstellantrieb bewegbaren Welle verbunden sein, an der auch mit Fingern versehene Halterungen der Strohleitrechen befestigt sind. Die Halterungen erstrecken sich quer zur Welle. Da der zwischen der Schwadleitposition und der Außerbetriebsposition der Strohleitrechen zu durchlaufende Winkelbereich der Welle größer als der Verschwenkwinkelbereich der Leiteinrichtung zwischen ihrer Häckselposition und ihrer Langstrohablageposition ist, kann die Leiteinrichtung einen Anschlag aufweisen, der mit einem geeigneten, drehfest mit der Welle verbundenen Element zusammenwirkt, um einen Winkelbereich der Welle bereitzustellen, in der keine Bewegung der Leiteinrichtung erfolgt.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einer erfindungsgemäßen Leiteinrichtung,
- Fig. 2: eine perspektivische Ansicht der Leiteinrichtung und zweier Strohleitrechen,
- Fig. 3: eine perspektivische rückwärtige Ansicht des rückwärtigen Bereich des Mähdreschers in der Häckselbetriebsart, und
- Fig. 4: eine perspektivische rückwärtige Ansicht des rückwärtigen Bereich des Mähdreschers in der Langstrohablagebetriebsart.

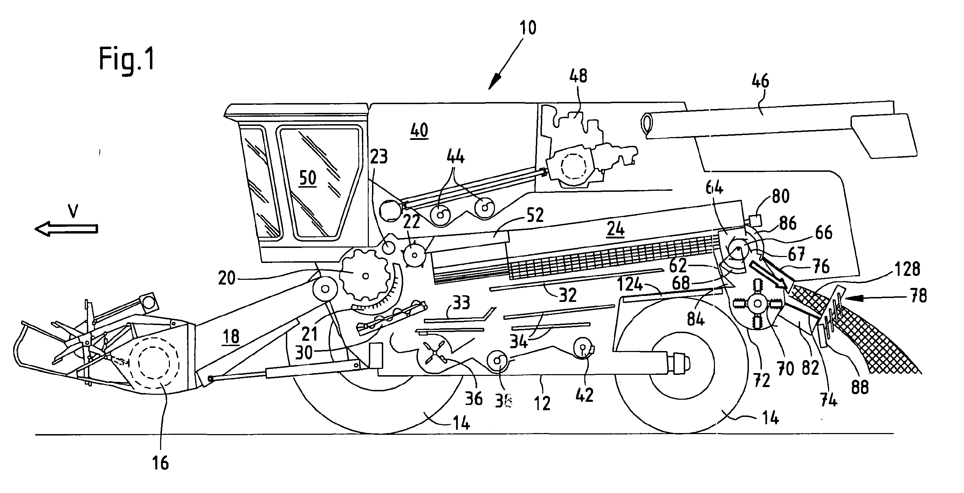

Die Figur 1 zeigt einen selbst fahrenden Mähdrescher 10 mit einem Rahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z.B. über ein abzuerntendes Feld zu bewegen.

An den vorderen Endbereich des Mähdreschers 10 ist eine Erntegutbergungsvorrichtung 16 in Form eines Schneidwerks angeschlossen, um Erntegut von dem Feld zu ernten und es nach oben und hinten durch einen Schrägförderer 18 Dresch- und Trennmitteln zuzuführen. Die Dresch- und Trennmittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Eine Abstreifrolle 23 und eine Wendetrommel 22 führen gemeinsam mit einem Zufuhrgehäuse das gedroschene Erntegut von der Dreschtrommel 20 und dem Dreschkorb 21 der Trenneinrichtung 24 in Form eines Axialabscheiders zu. Die Trenneinrichtung 24 wird an ihrer Rückseite durch ein Getriebe 80 angetrieben, das sie mit einem Verbrennungsmotor 48 antriebsmäßig verbindet. Als Trenneinrichtung 24 könnte auch ein Strohschüttler Verwendung finden. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus der Trenneinrichtung 24 austreten, fallen auf einen Schüttelboden 32, der sie zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben und von einem Bediener aus einer Fahrerkabine 50 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

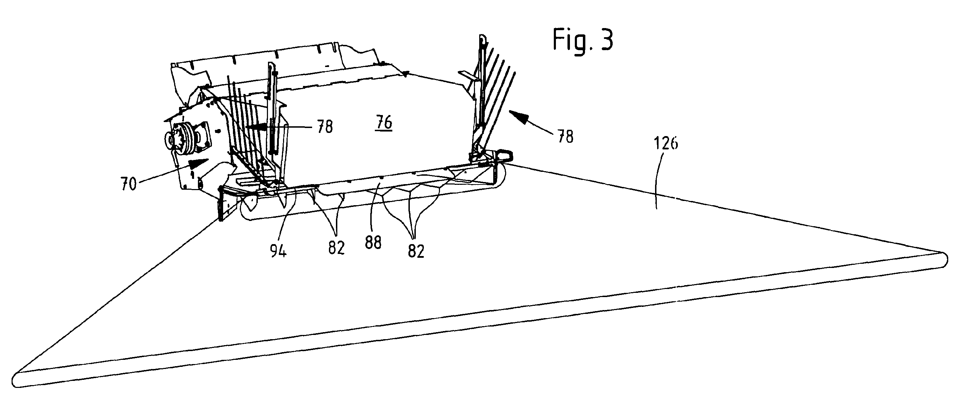

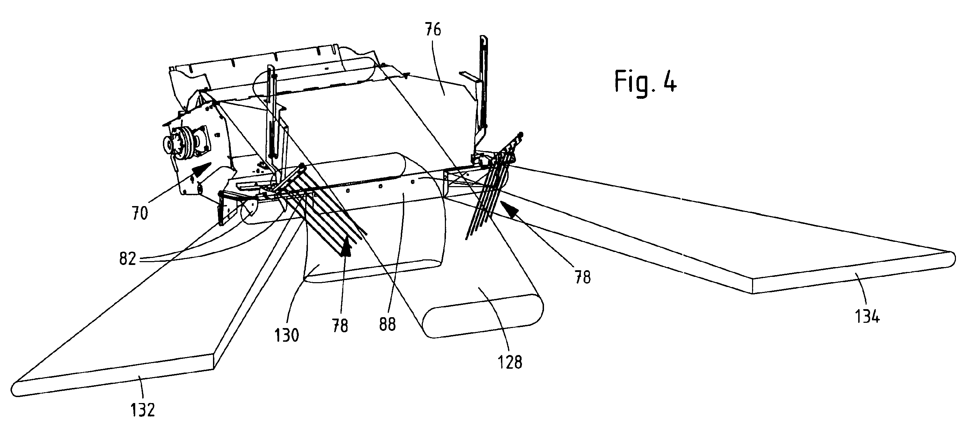

Von der Trenneinrichtung 24 werden ausgedroschene Erntegutreste (Stroh) durch einen Auslass 64 an der Unterseite des rückwärtigen Endes des nach hinten geschlossenen Gehäuses der Trenneinrichtung 24 nach unten ausgeworfen. Durch die Wirkung der Fliehkraft und der Schwerkraft fallen die Erntegutreste in einen vertikalen Auswurfschacht, der nach vorn durch eine vordere Wand 62 begrenzt wird. Unterhalb des Auslasses 64 ist eine Auswurftrommel 66 angeordnet, um deren Umfang Mitnehmer 67 verteilt sind. Nach hinten ist die Auswurftrommel 66 von einer rückwärtigen Wand 86 eingeschlossen. Die Auswurftrommel 66 wird um ihre Längsachse, die sich horizontal und quer zur Fahrtrichtung V erstreckt, in Drehung versetzt, in Figur 1 im Gegenuhrzeigersinn. Etwa auf der halben Höhe der vorderen Wand 62 liegt an ihr, etwa unterhalb der Drehachse der Auswurftrommel 66, ein als Ganzes um die Drehachse der Auswurftrommel 66 schwenkbares Strohleitelement 68 an. Das Strohleitelement 68 kann um diese Achse zwischen der in den Figuren 1 und 4 dargestellten Langstrohablageposition und einer Häckselposition (Figur 3) verschwenkt werden.

Unterhalb und geringfügig hinter der Auswurftrommel 66 ist in einem Gehäuse 72 ein an sich bekannter Strohhäcksler 70 angeordnet, der um eine horizontale, quer zur Fahrtrichtung verlaufende Achse (in der Figur im Gegenuhrzeigersinn) rotativ antreibbar ist. Er umfasst einen zylindrischen Körper mit pendelnd daran aufgehängten Häckselmessern, die mit im Gehäuse 72 angeordneten stationären Gegenmessern zusammenwirken, um die Erntegutreste zu häckseln und sie mittels einer an ihrer Unterseite mit Strohleitblechen 82 ausgestatteten Strohverteilerhaube 74 etwa über die Schnittbreite des Mähdreschers 10 auf dem Feld zu verteilen.

Das Strohleitelement 68 ist in sich konkav (kreisbogenförmig) gekrümmt und umschließt die Auswurftrommel 66 um einen Winkelbereich von etwa 45° konzentrisch. Es ist an seinen in Querrichtung äußeren Enden um die Achse der Auswurftrommel 66 schwenkbar angelenkt. Das Strohleitelement 68 erstreckt sich in der in Figur 1 wiedergegebenen Langstrohablageposition von der vorderen Wand 62 bis etwa über die Drehachse des Strohhäckslers 70. In dieser Position bewirkt das Strohleitelement 68, dass die ausgedroschenen Erntegutreste von der Auswurftrommel 66 unterhalb einer Auswurfhaube 76, die sich stromab der rückwärtigen Wand 86 befindet, und oberhalb der Strohverteilerhaube 74 schräg nach hinten und unten abgegeben werden.

In der Häckselposition ist das Strohleitelement 68 um die Drehachse der Auswurftrommel 66 (bezüglich der Figur 1 im Uhrzeigersinn) nach hinten verschwenkt. Dadurch wird zwischen der vorderen Wand 62 und der vorderen Kante des Strohleitelements 68 eine Öffnung freigegeben, durch die die Erntegutreste in den Strohhäcksler 70 gelangen. Das Strohleitelement 68 verlängert in dieser Position die rückwärtige Wand 86 nach unten und vorn. In ihrem Bereich unterhalb der Linie, an der das Strohleitelement 68 zum Anliegen kommt, wenn es sich in der Langstrohablageposition befindet, ist die vordere Wand 62 ebenfalls mit Leitkufen 84 versehen, um den Strohhäcksler 70 möglichst gleichmäßig beschicken zu können. Im Strohhäcksler 70 werden die Erntegutreste gehäckselt und schräg nach hinten und unten ausgeworfen. Unterhalb der am Auswurf des Strohhäckslers 70 angeordneten Strohverteilerhaube 74 sind die Strohleitbleche 82 vorgesehen, um die Richtung vorzugeben, in der die Erntegutreste auf den Boden des Feldes abgegeben werden.

Oberhalb des rückwärtigen Endes der Strohverteilerhaube 74 erstreckt sich ein Strohleitrechen 78, der zum Führen des Strohs im Schwadablagebetrieb dient. Unterhalb des rückwärtigen Endes der Strohverteilerhaube, stromab der Strohleitbleche 82, ist eine plattenförmige Leiteinrichtung 88 angebracht, die in der Figur 1 in ihrer Langstrohablageposition dargestellt ist, in der sie sich etwa vertikal nach unten erstreckt.

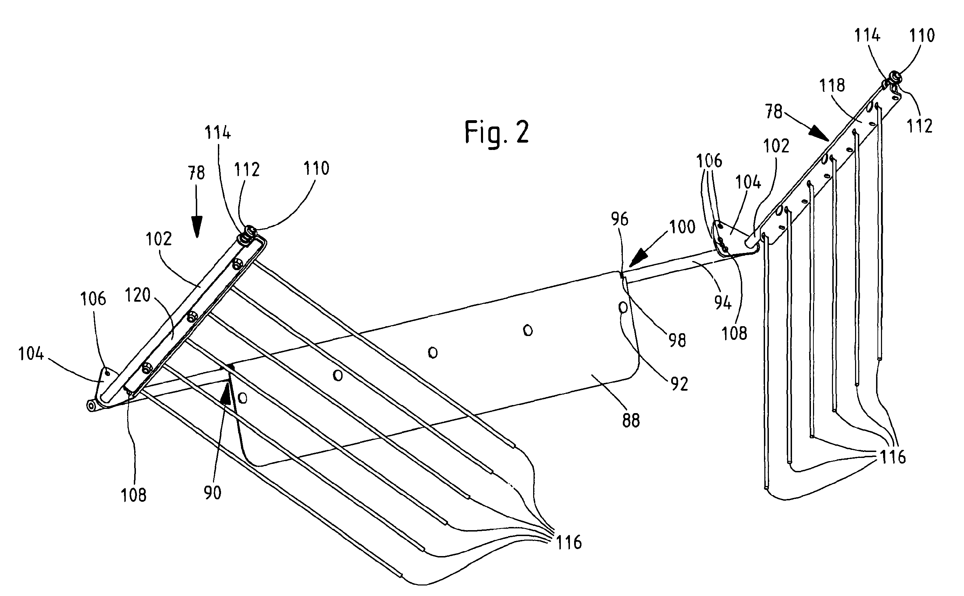

In der Figur 2 sind die Strohleitrechen 78 und die Leiteinrichtung 88 in einer perspektivischen Ansicht dargestellt. Die Leiteinrichtung 88 ist ein rechteckförmiges Blech, das derart gebogen ist, dass sich ein hohler Kanal 90 ergibt. Die Flächen des Blechs beidseits des Kanals 90 sind durch Schrauben 92 untereinander verbunden. Durch den Kanal 90 erstreckt sich eine Welle 94, die an beiden Enden des Kanals 90 jeweils mit einem nach außen überstehenden Element 96 versehen ist. Das Element 96 kommt in der in Figur 2 dargestellten Häckselposition der Leiteinrichtung 88 jeweils an einem Anschlag 98 zum Anliegen, der durch eine Aussparung 100 in der Leiteinrichtung 88 definiert wird, wobei das aufprallende Erntegut den Anschlag 98 gegen das Elemente 96 drückt. Die Aussparung 100 ist in Umfangsrichtung der Welle 94 derart bemessen, dass sich die Leiteinrichtung 88 zwischen den in den Figuren 3 und 4 gezeigten Positionen drehen lässt.

Die Strohleitrechen 78 umfassen jeweils eine Halterung 102, die sich parallel zueinander und jeweils quer zur Welle 94 erstrecken. Die Halterung 102 umfasst an ihrem unteren Ende eine mit mehreren Löchern 106 ausgestattete Platte 104. Jeweils eines der Löcher 106 wird von einem mit der Welle 94 verbundenen Zapfen 108 durchdrungen. Die Verbindung zwischen der Welle 94 und den Halterungen 102 erfolgt jeweils durch einen weiteren mit der Welle 94 verbundenen Zapfen 110, der sich innerhalb der Halterung 102 bis über ihr oberes Ende hinaus erstreckt, und durch eine zwischen den oberen Ende der Halterung 102 und einer mit dem weiteren Zapfen 110 verbundenen Scheibe 112 angeordneten Feder 114. Dadurch wird es möglich, die Halterung 102 entgegen der Kraft der Feder 114 von der Welle 94 abzuheben, um die Längsachse der Halterung 102 zu drehen und ein beliebiges der Löcher 106 auf den Zapfen 108 zu setzen, um den Winkel der Strohleitrechen 78 um die Längsachse der Halterung 102 an die jeweiligen Erntebedingungen, insbesondere Strohmengen, anzupassen.

Die Halterungen 102 tragen jeweils sechs Finger 116, die sich an ihren der Halterung 102 benachbarten Enden durch Öffnungen in Verstellelementen 118 und mit der Halterung 102 starr verbundenen Winkeln 120 erstrecken. Die Verstellelemente 118 sind durch Schrauben 122 mit den Winkeln 120 verbunden und können nach Lösen der Schrauben 122 gegenüber den Winkeln 120 entlang der Längsachse der Halterungen 102 bewegt werden, was eine Veränderung der Winkel der Finger 116 gegenüber der Längsachse der Halterung 102 zur Folge hat. Die Strohleitrechen 78 an sich sind in der DE 10 2004 014 306 A beschrieben.

Die Anbringung der Strohleitrechen 78 und der Leiteinrichtung 88 an der Rückseite des Mähdreschers 10 ist anhand der Figuren 1, 3 und 4 erkennbar. In den Figuren 1 und 4 befindet sich der Mähdrescher 10 in seiner Langstrohablagebetriebsart und in der Figur 3 in seiner Häckselbetriebsart. Das Strohleitelement 68 lässt in der Langstrohablagebetriebsart (Figur 1 und 4) den von der Trenneinrichtung 24 ausgeworfenen ersten Erntegutrestestrom (Stroh) an der Oberseite der Auswurfhaube 76 in einem Schwad auf das Feld auslaufen. Das Strohleitelement 68 lässt in der Häckselbetriebsart (Figur 3) den von der Trenneinrichtung 24 ausgeworfenen ersten Erntegutrestestrom (Stroh) in den Strohhäcksler 70 einlaufen, der ihn häckselt und unterhalb der Auswurfhaube 76 an den Strohleitblechen 82 entlang fördert, die es über die Arbeitsbreite des Mähdreschers 10 auf dem Feld verteilen. Der von der Reinigungseinrichtung 34 bereitgestellte zweite Erntegutstrom (Spreu) wird in beiden erwähnten Betriebsarten durch einen Schwingbodenförderer 124 ebenfalls in den Strohhäcksler 70 gefördert und etwa über die Arbeitsbreite des Mähdreschers 10 auf dem Feld verteilt.

Anhand der Figur 3 ist erkennbar, dass die Welle 94 sich an der Rückseite der Auswurfhaube 76 quer zur Vorwärtsfahrtrichtung des Mähdreschers 10 erstreckt. Die Welle 94 ist durch einen Handgriff (nicht gezeigt) manuell in eine Winkelposition verbracht worden, in der sich die Halterungen 102 der Strohleitrechen 78 von der Welle 94 schräg nach vorn und oben erstrecken, und in dieser Winkelposition arretiert. Die Finger 116 befinden sich demnach in einer Außerbetriebsposition, in der kaum eine Verletzungsgefahr von ihnen ausgeht. Die Leiteinrichtung 88 befindet sich in ihrer Häckselposition und erstreckt sich parallel zur Auswurfhaube 76 von der Welle 94 schräg nach hinten und unten und beeinflusst die vom Strohhäcksler 70 ausgeworfenen Erntegutströme 126 nicht nennenswert.

In der Figur 4 wurde die Welle 94 durch den Handgriff in eine Winkelposition verbracht, in der sich die Halterungen 102 der Strohleitrechen 78 von der Welle 94 schräg nach hinten und oben erstrecken, und in dieser Winkelposition arretiert. Die Finger 116 befinden sich demnach in einer Schwadleitposition, in der sie den an der Oberseite der Auswurfhaube 76 ausgeworfenen zweiten Erntegutrestestrom 128 zu einem Schwad formen. Die Leiteinrichtung 88 befindet sich in ihrer Langstrohablageposition und erstreckt von der Welle 94 etwa vertikal nach unten. Dadurch erreicht man, dass ein mittlerer Teilbereich 130 des zweiten Erntegutrestestroms, der ohne die Leiteinrichtung 88 in den zweiten Erntegutrestestrom 128 gelangen könnte, direkt nach unten auf den Boden des Felds gelangt. Die Spreu gelangt somit nicht in nennenswertem Maß in das Stroh. Außerdem wird ein Aufblasen des Schwads durch den vom Strohhäcksler 70 bereitgestellten Luftstrom vermieden. Die Breite der Leiteinrichtung 88 ist derart bemessen, dass die äußeren Teilbereiche 132, 134 des zweiten Erntegutrestestroms nicht durch die Leiteinrichtung 88 beeinflusst oder abgelenkt werden.

Der Winkelbereich der Leiteinrichtung 88 beträgt zwischen der Langstrohablageposition und der Häckselposition etwa 60°, während sich die Strohleitrechen zwischen ihrer Schwadleitposition und ihrer Außerbetriebsposition um etwa 90° gedreht werden. Diese unterschiedlichen Winkel werden durch die Elemente 96 und die Anschläge 98 ermöglicht, die einen Winkelbereich der Welle 94 bereitstellen, in dem sich die Leiteinrichtung 88 nicht bewegt.

## Patentansprüche

1. Mähdrescher (10), mit einer Trenneinrichtung (24), aus der ein erster Erntegutstrom (128) wahlweise in einer Häckselbetriebsart einem Strohhäcksler (70) zuführbar ist oder in einer Langstrohablagebetriebsart am Strohhäcksler (70) vorbeiführbar und als Schwad auf dem Boden eines Feldes ablegbar ist, einer Reinigungseinrichtung (34), aus der ein zweiter Erntegutrestestrom in der Häckselbetriebsart und in der Langstrohablagebetriebsart dem Strohhäcksler (70) zuführbar ist, und einer stromab des Strohhäckslers (70) angeordneten, wahlweise zwischen einer Langstrohablageposition und einer Häckselposition bewegbaren Leiteinrichtung (88), die ausgelegt ist, in der Langstrohablageposition den zweiten Erntegutrestestrom derart abzulenken, dass der zweite Erntegutrestestrom in eine andere Richtung ausgeworfen wird als der erste Erntegutrestestrom (128), während die Leiteinrichtung (88) in der Häckselposition derart anordenbar ist, dass beide Erntegutströme gemeinsam im Wesentlichen über die Breite einer Erntegutaufnahmeeinrichtung (16) des Mähdreschers (10) über das Feld verteilt werden, **dadurch gekennzeichnet, dass** die Leiteinrichtung (88) eingerichtet ist, in ihrer Langstrohablageposition einen in Richtung auf den ausgeworfenen ersten Erntegutstrom (128) gerichteten Teilbereich (130) des zweiten Erntegutrestestroms nach unten abzulenken und in ihrer Häckselposition den Fluss der beiden Erntegutströme nicht nennenswert abzulenken.

2. Mähdrescher (10) nach Anspruch 1, **dadurch gekennzeichnet, dass** stromab des Strohhäckslers (70) mehrere Strohleitbleche (82) seitlich nebeneinander angeordnet sind, und dass die Leiteinrichtung (88) stromab der Strohleitbleche (82) angeordnet ist.

3. Mähdrescher (10) nach einem der Ansprüche 1 oder 2, **dadurch gekennzeichnet, dass** die Leiteinrichtung (88) um eine horizontal und sich quer zur Vorwärtsfahrtrichtung des Mähdreschers (10) erstreckende Achse drehbar ist.

4. Mähdrescher (10) nach einem der Ansprüche 1 bis 3, **dadurch gekennzeichnet, dass** die Leiteinrichtung (88) mit einem Verstellantrieb verbunden ist, der eine Bewegung der Leiteinrichtung (88) zwischen der Langstrohablageposition und der Häckselposition ermöglicht.

5. Mähdrescher (10) nach Anspruch 4, **dadurch gekennzeichnet, dass** zwei Strohleitrechen (78) vorhanden sind, von denen jeweils einer an einer anderen Seite des in der Langstrohablagebetriebsart ausgeworfenen ersten Erntegutrestestroms (128) angeordnet ist, und die zwischen einer Schwadleitposition, in der sie in der Langstrohablagebetriebsart den ersten Erntegutrestestrom (128) zusammenführen, und einer Außerbetriebsposition bewegbar sind, und dass der Verstellantrieb weiterhin antriebsmäßig mit den Strohleitrechen (78) verbunden ist und sie in der Langstrohablageposition der Leiteinrichtung (88) in die Schwadleitposition und in der Häckselposition der Leiteinrichtung (88) in die Außerbetriebsposition verbringt.

6. Mähdrescher (10) nach Anspruch 5, **dadurch gekennzeichnet, dass** die Leiteinrichtung (88) mit einer mit dem Verstellantrieb verbundenen Welle (94) gekoppelt ist, die durch den Verstellantrieb um eine horizontal und quer zur Fahrtrichtung verlaufende Achse drehbar ist, und dass die Strohleitrechen (78) jeweils eine Halterung (102) und daran angebrachte Finger (116) umfassen, wobei die Halterungen (102) sich quer zur Welle (94) erstrecken und in Drehrichtung der Welle (94) drehfest mit ihr verbunden sind.

7. Mähdrescher (10) nach Anspruch 6, **dadurch gekennzeichnet, dass** die Leiteinrichtung (88) einen Anschlag (92) aufweist, der mit einem Element (96) der Welle (94) zusammenwirkt, so dass der Bewegungsbereich der Leiteinrichtung (88) kleiner als der der Strohleitrechen (78) ist.

## Claims

1. Combine harvester (10), with a separating device (24), from which a first crop stream (128) can either be supplied to a straw chopper (70) in a chopping operating mode or can be guided past the straw chopper (70) in a straw deposit mode and can be deposited as swath on the ground of a field, with a cleaning device (34), from which a second crop residue stream can be supplied to the straw chopper (70) in the chopping operating mode and in the straw deposit mode, and with a guiding device (88) which is arranged downstream of the straw chopper (70), is optionally movable between a straw deposit position and a chopping position and is designed, in the straw deposit position, to deflect the second crop residue stream in such a manner that the second crop residue stream is ejected in a different direction from the first crop residue stream (128) while, in the chopping position, the guide device (88) can be arranged in such a manner that both crop streams are together distributed over the field essentially over the width of a crop picking-up device (16) of the combine harvester (10), **characterized in that** the guide device (88) is set up so as, in its straw deposit position, to deflect a partial amount (130) of the second crop residue stream, which partial amount is directed towards the ejected, first crop stream (128), downwards and, in its chopping position, not to significantly deflect the flow of the two crop streams.

2. Combine harvester (10) according to Claim 1, **characterized in that** a plurality of straw guide plates (82) are arranged laterally next to one another downstream of the straw chopper (70), and **in that** the guide device (88) is arranged downstream of the straw guide plates (82).

3. Combine harvester (10) according to either of Claims 1 and 2, **characterized in that** the guide device (88) is rotatable about an axis extending horizontally and transversely with respect to the forwards direction of travel of the combine harvester (10).

4. Combine harvester (10) according to one of Claims 1 to 3, **characterized in that** the guide device (88) is connected to an adjusting drive which permits a movement of the guide device (88) between the straw deposit position and the chopping position.

5. Combine harvester (10) according to Claim 4, **characterized in that** there are two straw guide rakes (78) of which in each case one is arranged on a different side of the first crop residue stream (128) ejected in the straw deposit mode, and which are movable between a swath guide position, in which they bring together the first crop residue stream (128) in the straw deposit mode, and an idle position, and **in that** the adjusting drive continues to be connected in terms of drive to the straw guide rakes (78) and, in the straw deposit position of the guide device (88), brings them into the swath guide position and, in the chopping position of the guide device (88), brings them into the idle position.

6. Combine harvester (10) according to Claim 5, **characterized in that** the guide device (88) is coupled to a shaft (94) which is connected to the adjusting drive and can be rotated by the adjusting drive about an axis running horizontally and transversely with respect to the direction of travel, and **in that** the straw guide rakes (78) each comprise a mount (102) and fingers (116) attached thereto, with the mounts (102) extending transversely with respect to the shaft (94) and being connected in a rotationally fixed manner to the shaft (94) in the direction of rotation thereof.

7. Combine harvester (10) according to Claim 6, **characterized in that** the guide device (88) has a stop (92) which interacts with an element (96) of the shaft (94) such that the range of movement of the guide device (88) is smaller than that of the straw guide rakes (78).

## Revendications

1. Moissonneuse-batteuse (10), comportant un dispositif de séparation (24), à partir duquel un premier flux de résidus de récolte (128) peut être acheminé au choix dans un mode de fonctionnement pour paille hachée vers un broyeur de paille (70) ou dans un mode de fonctionnement pour paille longue le long du broyeur de paille (70) et être déposé sous forme d'andain sur le sol d'un champ, un dispositif de nettoyage (34), à partir duquel un deuxième flux de résidus de récolte peut être acheminé dans le mode de fonctionnement pour paille hachée et dans le mode de fonctionnement pour paille longue vers le broyeur de paille (70), et un dispositif de guidage (88), qui est monté en aval du broyeur de paille (70) et est mobile au choix entre une position de distribution de paille longue et une position de hachage, et qui est conçu, dans la position de distribution de paille, pour dévier le deuxième flux de résidus de récolte de telle sorte que le deuxième flux de résidus de récolte est éjecté dans une autre direction que le premier flux de résidus de récolte (128), tandis que le dispositif de guidage (88), dans la position de hachage, peut être agencé de telle sorte que les deux flux de résidus de récolte sont distribués conjointement sur le champ sensiblement sur toute la largeur d'un dispositif de ramassage de récolte (16) de la moissonneuse-batteuse (10), **caractérisée en ce que** le dispositif de guidage (88) est conçu, dans sa position de distribution de paille longue, pour dévier vers le bas une partie (130) du deuxième flux de résidus de récolte, dirigée vers le premier flux de résidus de récolte (128) éjecté, et, dans sa position de hachage, pour imprimer une déviation minime à la circulation des deux flux de résidus de récolte.

2. Moissonneuse-batteuse (10) selon la revendication 1, **caractérisée en ce que** plusieurs déflecteurs de paille (82) sont disposés les uns à côté des autres en aval du broyeur de paille (70), et **en ce que** le dispositif de guidage (88) est monté en aval des déflecteurs de paille (82).

3. Moissonneuse-batteuse (10) selon la revendication 1 ou 2, **caractérisée en ce que** le dispositif de guidage (88) est apte à tourner autour d'un axe horizontal et orienté transversalement à la direction d'avance de la moissonneuse-batteuse (10).

4. Moissonneuse-batteuse (10) selon l'une quelconque des revendications 1 à 3, **caractérisée en ce que** le dispositif de guidage (88) est relié à un mécanisme de déplacement, qui permet un mouvement du dispositif de guidage (88) entre la position de distribution de paille longue et la position de hachage.

5. Moissonneuse-batteuse (10) selon la revendication 4, **caractérisée en ce qu'**il est prévu deux râteaux de guidage de paille (78), parmi lesquels respectivement un est disposé sur un autre côté du premier flux de résidus de récolte (128) éjecté dans le mode de distribution de paille longue, et lesquels peuvent être déplacés entre une position de guidage d'andain, dans laquelle ils rassemblent le premier flux de résidus de récolte (128) dans le mode de distribution de paille longue, et une position hors service, et **en ce que** le mécanisme de déplacement est toujours encore relié en entraînement avec les râteaux de guidage de paille (78) et les amène dans la position de guidage d'andain lorsque le dispositif de guidage (88) est en position de distribution de paille longue, et dans la position hors service lorsque le dispositif de guidage (88) est en position de hachage.

6. Moissonneuse-batteuse (10) selon la revendication 5, **caractérisée en ce que** le dispositif de guidage (88) est couplé à un arbre (94), qui est relié au mécanisme de déplacement et qui, par l'intermédiaire du mécanisme de déplacement, peut tourner autour d'un axe horizontal et orienté transversalement à la direction de déplacement, et **en ce que** les râteaux de guidage de paille (78) comportent chacun un support (100) et des doigts (116) montés sur celui-ci, les supports (102) étant orientés transversalement à l'arbre (94) et étant reliés entre eux de manière solidaire en rotation dans le sens de rotation de l'arbre (94).

7. Moissonneuse-batteuse (10) selon la revendication 6, **caractérisée en ce que** le dispositif de guidage (88) comporte une butée (92) qui coopère avec un élément (96) de l'arbre (94), de telle sorte que la zone de mouvement du dispositif de guidage (88) est plus petite que celle des râteaux de guidage de paille (78).
